# EUROPEAN PATENT SPECIFICATION

(11) **EP 2 556 275 B1**
(45) Date of publication and mention of the grant of the patent: **30.08.2017**
(21) Application number: 11766243.7
(22) Date of filing: 06.04.2011
(51) Int. Cl.: F16H 57/04, F01M 9/06, F01M 11/06, F16N 7/26

(54) **LUBRICATION SYSTEM FOR A VEHICLE GEARBOX**
SCHMIERSYSTEM FÜR EIN FAHRZEUGGETRIEBE
SYSTÈME DE LUBRIFICATION POUR BOÎTE DE VITESSES DE VÉHICULE

(30) Priority: 08.04.2010 SE 1050339
(43) Date of publication of application: 13.02.2013
(73) Proprietor: Scania CV AB, 151 87 Södertälje (SE)
(72) Inventor: ARNELÖF, Per, S-136 64 Haninge (SE); HAMMARSTEDT, Kenneth, S-645 32 Strängnäs (SE)
(74) Representative: Scania CV AB
(86) International application number: PCT/SE2011/050404
(87) International publication number: WO 2011/126440

(56) References cited:
- WO-A1-02/086354
- WO-A1-2008/076061
- DD-A1- 143 174
- DE-U- 1 847 661
- FR-A1- 2 751 726
- JP-U- S6 220 257
- SU-A1- 1 312 198
- SU-A1- 1 312 198

## Description

### Technical field

The present invention relates to a lubrication system intended for a vehicle gearbox according to the preamble of claim 1, and to a gearbox according to claim 9, and as they are disclosed in SU1312198A.

### Background to the invention

The oil in a gearbox is used for lubrication and cooling of gear combinations and bearings in the gearbox. A high oil level in the gearbox has good lubricating and cooling effects but also increases the resistance to the rotation of the gearwheels, so-called splash losses or unnecessary splash lubrication, causing power losses in the gearbox and hence high fuel consumption. How good the lubrication and cooling required are depends on how much torque or power the gearbox transmits from input shaft to output shaft.

When a vehicle such as a truck is in motion on a level running surface, the gearbox input shaft runs at substantially the same speed as the gearbox output shaft, so no great amount of torque is transferred via gearwheels of the gearbox. This gear state therefore requires no great amount of lubrication and cooling of the gear combinations and the bearings. In a conventional gearbox, the gearwheels usually bathe in oil in an oil pan and fling the oil in the oil pan around as they rotate, and the gear combinations and the bearings are cooled and lubricated by the flung oil. When no great amount of cooling and lubrication of gear combinations and bearings is required in the aforesaid gear state, an unnecessarily large amount of oil in the oil pan creates an unnecessary amount of resistance to the rotation of the gearwheels, causing so-called splash losses.

US 5,158,152 refers to a system for lubrication of gearboxes comprising containers and pumps by means of which oil levels in the gearboxes can be controlled. In said system, the faster the vehicle speed the less oil the gearwheels are in, and the lower the vehicle speed the more the oil level is replenished. The result is satisfactory lubrication of various parts of the gearbox both when the vehicle is running at low speed and when the vehicle is running at high speed.

A disadvantage of that lubrication system is that the splash losses continue even when no great amount of torque is being transmitted via the gearwheels of the gearbox.

A further disadvantage of the system in US 5,158,152 is that it depends on a pump to adjust the oil level in the gearbox. The pump increases the vehicle's fuel consumption and makes the system unreliable in that its function depends entirely on the pump working properly.

### Object of the invention

The object of the present invention is therefore to propose a lubrication system of the kind indicated in the introduction which can reduce superfluous contact between oil and gearwheels in the gearbox even when no great amount of torque is transmitted via the gearwheels of the gearbox.

### Summary of the invention

The above and other objects indicated by the description set out below are achieved by the present invention as defined in the independent claims 1 and 9. Suitable embodiments of the invention are indicated in the dependent claims 2-8.

The present invention thus refers to a lubrication system intended for a gearbox in a vehicle, such that the gearbox comprises a gearbox housing, an input shaft, an output shaft, a countershaft and a number of gearwheels and the lubrication system comprises an oil sump situated in the gearbox housing and a container intended for temporary storage of lubricating oil and situated above said oil pump, characterised in that said container is provided with an aperture facing substantially away from the oil sump and is arranged to be able via said aperture to capture oil which splashes in the gearbox when the vehicle's longitudinal axis is parallel with a horizontal plane, and that said container allows the oil in it to run back from it to the sump via said aperture by force of gravity when the vehicle's longitudinal axis is at an angle to a horizontal plane.

The invention affords the advantage that the gearwheels intended to pass through oil in the oil sump as they rotate do not need to pass through an unnecessary large amount of oil when no great amount of torque is being transmitted from the input shaft of the gearbox to the output shaft of the gearbox via gearwheels of the gearbox. The so-called splash losses may thus be reduced, with consequent reduction in fuel consumption. A further advantage is that when increasing torque has once again to be transmitted via them, the gearwheels are provided with rapid and good lubrication and cooling. Further advantages are that the container is automatically replenished with oil, since the oil is flung around in the gearbox, when the vehicle's direction of movement is parallel with a horizontal plane through the gearbox, and the container is automatically emptied when the vehicle's direction of movement differs from a horizontal plane through the gearbox.

According to an advantageous embodiment, the container may be elongate and have a first end and a second end. In cases where the space in the gearbox is limited, the container will with advantage be narrow to gain space between the gearbox walls and the gearwheels and will at the same time be long in order to be able to extend along substantially the whole length of the sump. As large an amount of oil as possible can thus be captured by the container.

According to a further advantageous embodiment, the longitudinal axis of the container is at an angle to a horizontal plane through the gearbox when the longitudinal axis of the vehicle is parallel with a horizontal plane. This means that the oil will stay in the container better when the vehicle is in motion on a level running surface.

According to a further advantageous embodiment, the depth of the container decreases from said first end to said second end. This means that not all of the oil will run out of the container immediately when the vehicle is travelling uphill, but progressively more of it will run out of the container as the gradient becomes steeper.

According to a further advantageous embodiment, the container comprises at least two sections situated at different levels in a vertical plane. The container can thus accommodate a large amount of oil, and not all of the oil will run out of it at one and the same time.

According to a further advantageous embodiment, the length of said sections increases progressively with their proximity to the oil sump in a vertical plane. The oil can thus progressively run from an upper section to a lower section when the container is sloping relative to a horizontal plane and when said upper section is full.

According to a further advantageous embodiment, said at least two sections are displaced relative to one another across a horizontal plane. This means that when an upper section is full the oil can run down into, and progressively replenish, a lower section.

A further aspect defines a gearbox which comprises a lubrication system according to the present invention.

### Brief description of the drawings

The invention is described below in more detail on the basis of non-limitative embodiment examples with reference to the attached drawings, in which:
Figure 1 depicts a cross-section of an embodiment of the lubrication system in a vehicle gearbox according to the present invention, when the vehicle's longitudinal axis is parallel with a horizontal plane, the container is being replenished with oil and the level in the oil sump is decreasing, and
Figure 2 depicts a cross-section of the lubrication system according to the present invention when the vehicle's longitudinal axis is at an angle to a horizontal plane and the oil in the container is running down into the oil sump.

### Detailed description of the invention

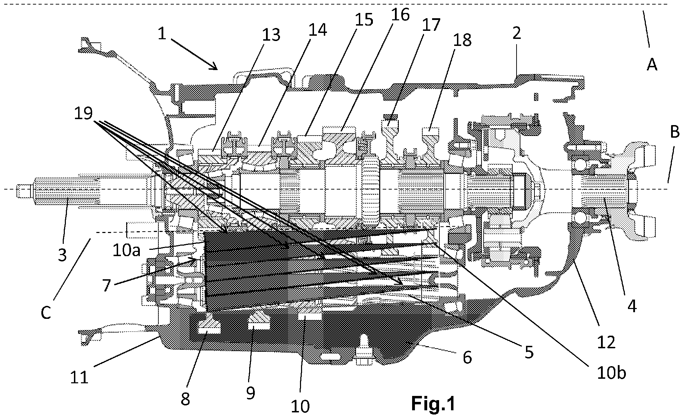

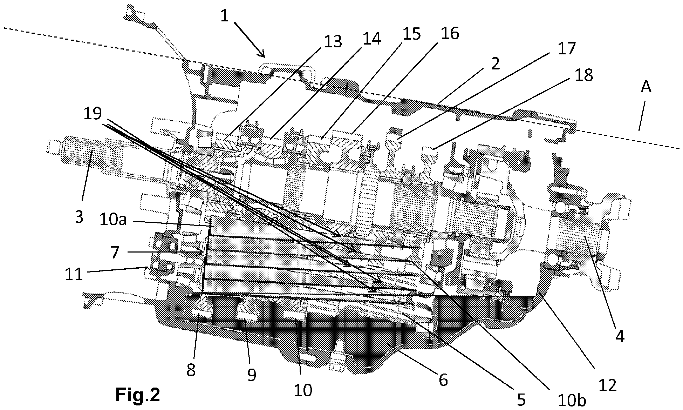

Figures 1 and 2 depict an embodiment of the present invention appropriate to a lubrication system intended for a gearbox 1 in a vehicle. It should however be noted immediately that the invention is in no way limited to solely this type of lubrication system but may be applied to various lubrication systems.

Figure 1 depicts a cross-section of a lubrication system according to the present invention. The lubrication system is situated in a truck gearbox 1 which comprises a gearbox housing 2, an input shaft 3, an output shaft 4, a countershaft 5 and a number of gearwheels 8, 9, 10, 13, 14, 15, 16, 17, 18 disposed on these shafts 3, 4, 5. Figure 1 shows the longitudinal axis B of the gearbox 1 parallel to the longitudinal axis A of the vehicle. In this embodiment, the lubrication system comprises an oil sump 6 situated in the truck gearbox 1 and a container 7 which is of elongate configuration and has its longitudinal axis C parallel to the longitudinal axis A of the vehicle. It is of course also possible for the container 7 to be so arranged that its longitudinal axis C is at an angle to the longitudinal axis A of the vehicle. This angle may of course vary depending on how quickly it is desired that the oil should run out of the container 7 when the vehicle is travelling uphill. In Figure 1, the truck's longitudinal axis A is parallel with a horizontal plane, which means that the truck is stationary or in motion on a level running surface. The container 7 in Figure 1 is also depicted in cross-section.

The container 7 according to the invention is intended to reduce splash losses in direct drive. The container 7 is provided with an aperture 19 which faces away from the oil sump 6 so that when the vehicle, in this case a truck, is in motion on a level running surface the oil in the sump 6 will splash around in the gearbox 1, fall through the aperture 19 and accumulate in the container 7. The volume of the container 7 is such that there will in the oil sump 6 be an amount of oil appropriate to direct drive, making it possible to reduce the splash losses in the gearbox 1. The container 7 may of course be provided with more than one aperture 19.

The container 7 comprises five sections situated at different levels. The container 7 is of course not limited to this particular configuration but may be configured in various different ways. The container 7 further comprises a first end 10a and a second end 10b, the first end 10a being fastened in a forward portion 11 of the gearbox housing 2 with respect to the direction of movement of the truck in which the gearbox 1 is fitted. It is of course also possible for the container 7 to be integrated in the gearbox, i.e. cast integrally with the gearbox housing 2. Each of the sections of the container 7 comprises in this embodiment a bottom and three sidewalls, one of which runs transversely to the container's longitudinal axis C, at the first end 10a of the container 7, while the other two sidewalls extend from said first end 10a of the container 7 along the longitudinal axis C of the container 7 to said second end 10b of the container 7 and progressively decrease in height from the first end 10a to the second end 10b of the container 7. The container's sections may of course also take the form of, for example, three sidewalls, the first of them being disposed transversely to the longitudinal axis C of the container 7, at the first end 10a of the container 7, while the second and third sidewalls are so disposed that the cross-section of the container 7 has a V shape such that the height of said second and third sidewalls decreases from the first end 10a to the second end 10b of the container 7. It is also possible for the container's sections to be configured with a substantially U-shaped cross-section such that a sidewall is disposed at said first end 10a and the depth of the container 7 decreases from said first end 10a to said second end 10b of the container 7. It is also possible to conceive of the longitudinal axis C of the container 7 sloping relative to the truck's longitudinal axis A, and of the depth being substantially constant along the whole length of the container 7. Moreover, the various sections are preferably displaced relative to one another transversely to the longitudinal axis of the container 7 so that when a section of the container 7 is full the oil runs over the edge of that section and down into, and thereby replenishes, the next section below, and so on until all of the sections are full. The various sections may of course also be displaced relative to one another in the horizontal plane. The various sections are preferably also of different lengths to simplify the runoff to the next section, such that the uppermost section is shortest and the length of the sections progressively increases the further down they are situated in the vertical plane in the gearbox 1. The container 7 in Figure 1 has its first end 10a fastened to the forward end 11 of the gearbox.

As may be seen in Figure 1, the gearbox is also provided with an oil sump 6, i.e. an oil pan, which contains oil, and at least one of the gearwheels 8, 9, 10 is at least partly immersed in the oil in the sump 6. In Figure 1, the gearwheels 8, 9, 10 and the countershaft 5 are at least partly immersed in the oil in the sump 6, but in order to illustrate their position below the oil level they are not covered in oil in the diagram. The gearwheels 8, 9, 10, 13, 14, 15, 16, 17, 18 on the input shaft 3, the output shaft 4 and the countershaft 5 of the gearbox 1 may be connected together in various combinations to achieve different gear states, i.e. different transmission ratios for the vehicle's propulsion.

When the vehicle is travelling at a steady speed on a planar and even running surface, e.g. a motorway, the input shaft 3 and the output shaft 4 of the gearbox are connected together to achieve a high gear, so-called direct drive. In this gear state, which is much used in heavy long-distance trucks, the input shaft 3 and the output shaft 4 rotate at substantially the same speed and the gearwheels 8, 9, 10 disposed on the countershaft 5 transmit no great amount of torque, since they are not participating in the vehicle's propulsion. In this situation, the gearwheels 8, 9, 10 fling oil around in the gearbox 1 and lubricate and thereby cool gear combinations and bearings. When no great amount of torque is transmitted via the gearwheels of the gearbox 1, there is no need for any great amount of lubrication and cooling of the gearwheels 8, 9, 10, 13, 14, 15, 16, 17, 18. If the oil level in the sump 6 is high in this gear state, the gearwheels 8, 9, 10 will pass through an unnecessarily large amount of oil, resulting in so-called splash losses or unnecessary splash lubrication. Large splash losses cause high fuel consumption in that the gearwheels 8, 9, 10 encounter high resistance from the large amount of oil in the sump 6. The excessive amount of oil in the sump also causes the oil to age more quickly because it becomes warmer when unnecessary splash lubrication occurs. Wear in the gearbox 1 also increases with higher oil temperatures.

Figure 2 depicts a cross-section of the lubrication system according to the present invention. It shows the truck's longitudinal axis A at an angle to a horizontal plane, which means that the truck is travelling uphill or stationary on an upgrade. The container 7 in Figure 2 is also depicted in cross-section. As in Figure 1, the container 7 comprises five sections situated at different levels, each section comprising a bottom and three sidewalls. As the vehicle's longitudinal axis A is at an angle to a horizontal plane, the oil in the container 7 will progressively run out from the container 7 and down into the oil sump 6. The greater the angle between the vehicle's longitudinal axis A and the horizontal plane, the more oil will run out from the container 7.

When the truck is travelling uphill, a large amount of torque will be transmitted from the input shaft 3 of the gearbox 1 to its output shaft 4 via the gearwheels 8, 9, 10, 13, 14, 15, 16, 17, 18. This gear state requires good lubrication and cooling of gearwheels and bearings, so the oil level in the oil sump 6 needs to be high. When the vehicle is travelling uphill, the container 7 will also be at an angle to the horizontal plane such that oil progressively starts running out from the container 7 and down into the sump 6, thereby raising the oil level in the sump 6.

As in Figure 1, the gearwheels 8, 9, 10 and the countershaft 5 are left uncovered by oil in the diagram, to make them visible.

## Claims

1. A lubrication system for a gearbox in a vehicle, such that the gearbox (1) comprises a gearbox housing (2), an input shaft (3), an output shaft (4), a countershaft (5) and a number of gearwheels (8, 9, 10, 13, 14, 15, 16, 17, 18) and the lubrication system comprises an oil sump (6) which is situated in the gearbox housing (2) and a container (7) which is intended for temporary storage of lubricating oil and is situated above said oil sump (6), **characterised in that** said container (7) is provided with an aperture (19) which faces substantially away from the oil sump (6), which container (7) is intended to be able via said aperture (19) to capture oil which splashes in the gearbox (1) when the vehicle's longitudinal axis (A) is parallel to a horizontal plane, and that said container (7) is so arranged that at least part of the oil in it is allowed to run back from the container (7) to the oil sump (6) via said aperture (19) by force of gravity when the vehicle's longitudinal axis (A) is at an angle to said horizontal plane.

2. A lubrication system according to claim 1, **characterised in that** the container (7) is of elongate configuration and that it has a first end (10a) and a second end (10b).

3. A lubrication system according to claim 2, **characterised in that** the longitudinal axis (C) of the container (7) is at an angle to said horizontal plane through the gearbox (1) when the vehicle's longitudinal axis (A) is parallel with a horizontal plane.

4. A lubrication system according to claims 2-3, **characterised in that** the first end (10a of the container (7) is fastened in the forward end (11) of the gearbox housing (2) with respect to the direction of movement of the vehicle in which the gearbox (1) is fitted, and that the other end (10b) of the container (7) extends upwards towards an upper end of the gearbox housing (2) and rearwards towards the rear end (12) of the gearbox housing (2).

5. A lubrication system according to claims 2-4, **characterised in that** the depth of the container (7) decreases from said first end (10a) to said second end (10b).

6. A lubrication system according to any one of the foregoing claims, **characterised in that** the container (7) comprises at least two sections situated at different levels in a vertical plane.

7. A lubrication system according to claim 6, **characterised in that** the length of said sections increases progressively with their proximity to the oil sump (6) in a vertical plane.

8. A lubrication system according to claims 6-7, **characterised in that** said at least two sections are displaced relative to one another across a horizontal plane.

9. A gearbox **characterised in that** it comprises a lubrication system according to any one of the foregoing claims.

## Patentansprüche

1. Schmiersystem für ein Getriebe in einem Fahrzeug, wobei das Getriebe (1) ein Getriebegehäuse (2), eine Eingangswelle (3), eine Abtriebswelle (4), eine Vorgelegewelle (5) und eine Anzahl Getrieberäder (8, 9, 10, 13, 14, 15, 16, 17, 18) aufweist, und das Schmiersystem einen Ölsumpf (6) aufweist, der sich im Getriebegehäuse (2) befindet, und einen Behälter (7), der zur vorübergehenden Speicherung von Schmieröl vorgesehen ist und sich über dem Ölsumpf (6) befindet, **dadurch gekennzeichnet, dass** der Behälter (7) mit einer Öffnung (19) ausgeführt ist, die im Wesentlichen vom Ölsumpf (6) weg weist, wobei der Behälter (7) so eingerichtet ist, dass er fähig ist, über die Öffnung (19) Öl, das in das Getriebe (1) spritzt, wenn die Fahrzeug-Längsachse (A) parallel zu einer waagrechten Ebene liegt, aufzufangen, und dass der Behälter (7) so angeordnet ist, dass zumindest ein Teil des darin befindlichen Öls aus dem Behälter (7) durch Schwerkraft über die Öffnung (19) zurück in den Ölsumpf (6) fließen kann, wenn die Fahrzeug-Längsachse (A) relativ zur waagrechten Ebene geneigt ist.

2. Schmiersystem nach Anspruch 1, **dadurch gekennzeichnet, dass** der Behälter (7) eine langgestreckte Konfiguration mit einem ersten Ende (10a) und einem zweiten Ende (10b) hat.

3. Schmiersystem nach Anspruch 2, **dadurch gekennzeichnet, dass** die Längsachse (C) des Behälters (7) relativ zur waagrechten Ebene durch das Getriebe (1) geneigt verläuft, wenn die Fahrzeug-Längsachse (A) parallel zu einer waagrechten Ebene liegt.

4. Schmiersystem nach den Ansprüchen 2 bis 3, **dadurch gekennzeichnet, dass** das erste Ende (10a) des Behälters (7) im vorderen Ende (11) des Getriebegehäuses (2), bezogen auf die Bewegungsrichtung des Fahrzeugs, in dem das Getriebe (1) eingebaut ist, befestigt ist, und dass sich das andere Ende (10b) des Behälters (7) nach oben zum oberen Ende des Getriebegehäuses (2) und nach hinten zum hinteren Ende des Getriebegehäuses (2) erstreckt.

5. Schmiersystem nach den Ansprüchen 2 bis 4, **dadurch gekennzeichnet, dass** die Tiefe des Behälters (7) vom ersten Ende (10a) zum zweiten Ende (10b) abnimmt.

6. Schmiersystem nach einem der vorigen Ansprüche, **dadurch gekennzeichnet, dass** der Behälter (7) mindestens zwei Abschnitte aufweist, die auf unterschiedlichen Niveaus in einer senkrechten Ebene liegen.

7. Schmiersystem nach Anspruch 6, **dadurch gekennzeichnet, dass** die Länge der Abschnitte mit ihrer Nähe zum Ölsumpf (6) in einer senkrechten Ebene fortschreitend zunimmt.

8. Schmiersystem nach den Ansprüchen 6 bis 7, **dadurch gekennzeichnet, dass** mindestens zwei Abschnitte relativ zueinander über eine waagrechte Ebene versetzt sind.

9. Getriebe, **dadurch gekennzeichnet, dass** es ein Schmiersystem gemäß einem der vorigen Ansprüche aufweist.

## Revendications

1. Système de lubrification pour une boîte de vitesses dans un véhicule, tel que la boîte de vitesses (1) comprenne un boîtier de boîte de vitesses (2), un arbre d'entrée (3), un arbre de sortie (4), un contre-arbre (5) et un certain nombre de roues d'engrenage (8, 9, 10, 13, 14, 15, 16, 17, 18) et que le système de lubrification comprenne un bac à huile (6) qui est situé dans le boîtier de boîte de vitesses (2) et un récipient (7) qui est destiné au stockage temporaire d'huile de lubrification et qui est situé au-dessus dudit bac à huile (6), **caractérisé en ce que** ledit récipient (7) est muni d'une ouverture (19) qui est dirigée de façon à s'éloigner sensiblement du bac à huile (6), ce récipient (7) étant conçu de façon à être susceptible, par l'intermédiaire de ladite ouverture (19), de capturer de l'huile qui produit des éclaboussures dans la boîte de vitesses (1) lorsque l'axe longitudinal (A) du véhicule est parallèle à un plan horizontal, et **en ce que** ledit récipient (7) est agencé de telle sorte qu'au moins une partie de l'huile dans celui-ci soit autorisée à revenir à partir du récipient (7) jusqu'au bac à huile (6) par l'intermédiaire de ladite ouverture (19) par la force de la gravité lorsque l'axe longitudinal (A) du véhicule présente un certain angle par rapport audit plan horizontal.

2. Système de lubrification selon la revendication 1, **caractérisé en ce que** le récipient (7) a une configuration allongée, et **en ce qu'**il comporte une première extrémité (10a) et une deuxième extrémité (10b).

3. Système de lubrification selon la revendication 2, **caractérisé en ce que** l'axe longitudinal (C) du récipient (7) présente un certain angle par rapport audit plan horizontal traversant la boîte de vitesses (1) lorsque l'axe longitudinal (A) du véhicule est parallèle à un plan horizontal.

4. Système de lubrification selon les revendications 2 à 3, **caractérisé en ce que** la première extrémité (10a) du récipient (7) est fixée dans l'extrémité avant (11) du boîtier de boîte de vitesses (2) vis-à-vis de la direction de déplacement du véhicule dans lequel la boîte de vitesses (1) est disposée, et **en ce que** l'autre extrémité (10b) du récipient (7) s'étend vers le haut, vers une extrémité supérieure du boîtier de boîte de vitesses (2), et vers l'arrière, vers l'extrémité arrière (12) du boîtier de boîte de vitesses (2).

5. Système de lubrification selon les revendications 2 à 4, **caractérisé en ce que** la profondeur du récipient (7) diminue de ladite première extrémité (10a) à ladite deuxième extrémité (10b).

6. Système de lubrification selon l'une quelconque des revendications précédentes, **caractérisé en ce que** le récipient (7) comprend au moins deux sections situées à des niveaux différents dans un plan vertical.

7. Système de lubrification selon la revendication 6, **caractérisé en ce que** la longueur desdites sections augmente progressivement en fonction de leur proximité avec le bac à huile (6) dans un plan vertical.

8. Système de lubrification selon les revendications 6 à 7, **caractérisé en ce que** lesdites sections au nombre d'au moins deux sont déplacées l'une par rapport à l'autre sur un plan horizontal.

9. Boîte de vitesses, **caractérisée en ce qu'**elle comprend un système de lubrification selon l'une quelconque des revendications précédentes.
